# EUROPÄISCHE PATENTANMELDUNG

(11) **EP 3 492 252 A1**
(43) Veröffentlichungstag der Anmeldung: **05.06.2019**
(21) Anmeldenummer: 18000865.8
(22) Anmeldetag: 02.11.2018
(51) Int. Cl.: B29D 11/00, B24B 13/00, B24B 13/005, B23Q 7/14, B24B 41/00, B24B 13/06

(54) **VERFAHREN ZUR FERTIGUNG VON INDIVIDUELLEN BRILLENLINSEN NACH EINEM REZEPTAUFTRAG**

(30) Priorität: 08.11.2017 DE 102017010321
(71) Anmelder: Satisloh AG, 6340 Baar (CH)
(72) Erfinder: Kreis, Michael, D-63584 Gründau (DE)
(74) Vertreter: Oppermann, Mark

(57) **Zusammenfassung**

Ein Verfahren zur Fertigung von individuellen Brillenlinsen L nach einem Rezeptauftrag umfasst die Schritte: (i) Blocken eines bereitgestellten Linsenrohlings (LR) als Werkstück auf ein aus einem Blockstücklager (BL) von einer Mehrzahl von Blockstücken (B) bereitgestelltes Blockstück mittels eines Blockmaterials, wobei eine erste Fläche des Linsenrohlings dem Blockstück zugewandt ist, (ii) Behandeln des geblockten Linsenrohlings zumindest an einer zweiten Fläche, um eine geblockte behandelte Brillenlinse (L) als Werkstück zu erhalten, und (iii) Abblocken der behandelten Brillenlinse von dem Blockstück, wobei das Werkstück, ggf. im geblockten Zustand, zwischen den Schritten (i) bis (iii) in einem von mehreren vorgehaltenen Transportkästen (T) transportiert wird. Bei dem Verfahren werden die Blockstücke vor dem Schritt (i) des Blockens in den Transportkästen in dem Blockstücklager gespeichert und für den Schritt (i) des Blockens in den Transportkästen aus dem Blockstücklager bereitgestellt und/oder die Blockstücke nach dem Schritt (iii) des Abblockens in den Transportkästen zu dem Blockstücklager transportiert.

## Beschreibung

### TECHNISCHES GEBIET

Die vorliegende Erfindung bezieht sich auf ein Verfahren zur Fertigung von individuellen Brillenlinsen nach einem Rezeptauftrag gemäß dem Oberbegriff des Patentanspruchs 1.

### STAND DER TECHNIK

Die Arbeits- bzw. Bearbeitungsstationen in Produktionsstätten zur Fertigung von individuellen Brillenlinsen aus den gebräuchlichen Materialien wie Polycarbonat, Mineralglas, CR 39, HI-Index, etc. nach Rezeptauftrag - auch "Job" genannt - sind üblicherweise zu einem hohen Grad automatisiert. Innerhalb der Fertigung dienen hierbei Transportkästen - auch als Rezeptkästen oder "Jobtrays" bezeichnet - als Transportmedium, die z.B. über Transportbänder, Querrolleinrichtungen zum Querausschleusen aus dem Materialfluss, Hubeinrichtungen, Weichen, etc. zwischen den einzelnen Stationen transportiert werden. Solche Transportkästen sind beispielsweise Gegenstand der deutschen Norm DIN 58763.

Wie etwa in der Druckschrift EP 1 475 320 A2 beschrieben ist, können in den Transportkästen jeweils die rechte und die linke Brillenlinse eines Rezeptauftrags und ggf. das zugehörige Feinschleif- oder Polierwerkzeug für die jeweilige Brillenlinse aufgenommen werden. Darüber hinaus besitzt ein derartiger Transportkasten ein Fach für den oft schriftlichen, werksinternen Auftrag. Dieser trägt in der Regel eine Markierung in Form eines Strichcodes od.dgl. Vielfach sind die Transportkästen selbst auch mit sogenannten "Transpondern" oder "Radio Frequency Identification Devices", kurz "RFID", d.h. Halbleiterelementen zum Speichern und Senden von Informationen ausgerüstet, mit deren Hilfe eine Identifikation des jeweiligen Rezeptauftrags und des aktuellen Bearbeitungszustands der Brillenlinsen möglich ist.

Mittels der Transportkästen müssen Brillenlinsen aus verschiedenen Materialien unterschiedlichen Arbeitsstationen bzw. Maschinen zugeführt werden, an denen die Brillenlinsen mit unterschiedlichen Hilfs- und Betriebsstoffen (z.B. Poliermittel, Polierpads) sowie unterschiedlichen Prozessparametern bearbeitet werden. Ein Großteil dieser Bearbeitung der Brillenlinsen findet auf sogenannten "Blockstücken" statt, die dazu dienen, die Brillenlinsenrohlinge bei der Bearbeitung in der jeweiligen Bearbeitungsmaschine oder -vorrichtung zu halten. Solche Blockstücke sind z.B. Gegenstand der deutschen Norm DIN 58766.

Zum sogenannten "Blocken" eines Brillenlinsenrohlings auf ein solches Blockstück wird gemäß dieser Norm das Blockstück zunächst in eine vorgegebene Position gegenüber einer üblicherweise mittels einer Folie geschützten Fläche des Brillenlinsenrohlings gebracht. Sodann wird in dieser Position der Raum zwischen Blockstück und Brillenlinsenrohling mit einem geschmolzenen Material - herkömmlicherweise zumeist ein Wood-Metall, auch als "Alloy" bezeichnet, d.h. eine in der Regel Wismut-basierte metallische Legierung - ausgefüllt. Nach Erstarren des Füllmaterials stellt das Blockstück eine Aufnahme zur Bearbeitung des Brillenlinsenrohlings dar.

Um die mit der vorbeschriebenen Alloy-Technologie verbundene Verwendung von Schwermetallen zu vermeiden, die Handhabung für den Anwender sicherer zu machen und die Umweltbelastung bei der Fertigung von Brillenlinsen zu senken, wurde von der Anmelderin eine Technologie für ein Alloy-freies Blocken entwickelt, kurz "ART" (für Alloy Replacement Technology) genannt. Diese ART-Technologie ist in der von der Satisloh GmbH publizierten, den Oberbegriff des Patentanspruchs 1 bildenden Informationsschrift "Introduction to Alloy-free lens production", Frank Heepen, Product Management Blocking & Deblocking, V5.1LC vom 15.08.2015 im Detail beschrieben.

Kurzgefasst verwendet die ART-Technologie ein universelles, wiederverwendbares organisches Blockstück und UV-härtenden Kleber als Blockmaterial zur Verbindung von Blockstück und Brillenlinsenrohling anstelle von Alloy und Folie, um die Brillenlinsenrohlinge jedenfalls für das sogenannte "Generieren" - d.h. die Vorbearbeitung der optisch wirksamen Fläche des Brillenlinsenrohlings zur Erzeugung der rezeptgemäßen Makrogeometrie - und Polieren - also die Feinbearbeitung der optisch wirksamen Fläche, um Vorbearbeitungsspuren zu beseitigen und die gewünschte Mikrogeometrie zu erhalten - sowie ggf. auch Folgeschritte, wie Markieren, Beschichten, etc. zu fixieren und zu schützen. Diese Blockstücke besitzen allgemein einen im Wesentlichen rotationssymmetrischen Grundkörper, der auf der einen Seite eine Linsenbefestigungsfläche, auf die der Linsenrohling mittels des Blockmaterials geblockt werden kann, und auf der anderen Seite einen standardisierten Einspannabschnitt hat, über den der auf dem Grundkörper geblockte Linsenrohling in einer Maschine oder Vorrichtung zur Bearbeitung bzw. Behandlung des Linsenrohlings fixiert werden kann.

In einer ART-Produktionsstätte werden in der Regel verschiedene Gruppen von Blockstücken verwendet, die sich im Hinblick auf Blockkrümmung - auch "Basiskurve" genannt - und Durchmesser der Linsenbefestigungsfläche unterscheiden. Hiermit wird vor allem das Ziel verfolgt, die Geometrie der Linsenbefestigungsfläche des Blockstücks möglichst an die jeweilige Geometrie der zu blockenden Fläche des Linsenrohlings anzunähern. Zum einen soll der Linsenrohling durch Wahl eines geeigneten Durchmessers der Linsenbefestigungsfläche am Blockstück bei der Bearbeitung eine tunlichst vollflächige Abstützung erfahren und an seiner dem Blockstück zugewandten Fläche, die in der Regel fertigbearbeitet und ggf. auch schon beschichtet ist, möglichst vollflächig geschützt werden. Zum anderen soll durch Wahl einer geeigneten Blockkrümmung gewährleistet werden, dass das Blockmaterial zwischen Linsenrohling und Blockstück keine großen Dickenunterschiede aufweist, die aufgrund von Schrumpfungserscheinungen im Blockmaterial zu Verspannungen im geblockten Linsenrohling und letztlich Geometriefehlern an der vom Blockstück abgeblockten Brillenlinse führen können, wie dies z.B. ausführlich in der Druckschrift EP 2 011 604 A1 beschrieben ist.

Somit ergibt sich eine gewisse Anzahl von unterschiedlichen Blockstückgruppen, die, je nachdem, wie die ART-Produktionsstätte betrieben wird, ca. 20 bis 40 betragen kann. In Produktionsstätten mit Wiederverwendung von Blockstücken müssen die gerade nicht verwendeten Blockstücke zwischengespeichert bzw. gelagert werden. Typischerweise sind die Blockstücke nach Blockstückgruppen sortiert als Schüttgut in einer entsprechenden Anzahl von Lagerboxen gespeichert. Die einzelnen Blockstücke sind dabei mit einem DataMatrix-Code, kurz "DMC", gekennzeichnet, der eine individuelle Rückverfolgung und Verwaltung mittels eines Computersystems erlaubt.

Steht ein Rezeptauftrag zur Bearbeitung an, so gibt eine Prozesssteuerung das (bzw. die) hierzu passende(n) Blockstück(e) vor - normalerweise zwei Blockstücke, je eins für die linke und die rechte Brillenlinse des Rezeptauftrags, ggf. aber auch nur eins, wenn nur eine Brillenlinse zu fertigen ist. Die Zuordnung der von der Prozesssteuerung vorgegebenen Blockstücke zum jeweiligen Rezeptauftrag erfolgt in der Regel als manueller Prozess: Eine Bedienperson entnimmt das bzw. die passenden Blockstücke aus der bzw. den entsprechenden Lagerboxen. Dies kann zur Reduzierung von Verwechslungen und Fehlgriffen durch ein sogenanntes "pick by light"-System unterstützt sein, bei dem an der entsprechenden Lagerbox von der Prozesssteuerung gesteuert ein Licht aufleuchtet. Sodann legt die Bedienperson das bzw. die passenden Blockstücke in den zu rüstenden Transportkasten. Durch Einscannen des DMC der Blockstücke erfolgt hierbei über die Prozesssteuerung eine Verknüpfung zum jeweiligen Rezeptauftrag.

Nach Komplettierung der Transportkästen mit den zum jeweiligen Rezeptauftrag passenden Linsenrohlingen durchlaufen die Werk- und Blockstücke den Fertigungsprozess mit den Hauptschritten (i) Blocken der Linsenrohlinge auf die Blockstücke, (ii) Behandeln, d.h. Bearbeiten und ggf. Beschichten der geblockten Linsenrohlinge und (iii) Abblocken der behandelten Brillenlinsen von den Blockstücken, wobei der Transport zwischen diesen Schritten mittels der Transportkästen erfolgt, die jeweils dem jeweiligen Rezeptauftrag zugeordnet bleiben. Nach dem Abblockvorgang werden die gebrauchten Blockstücke herkömmlicherweise als Schüttgut aus der Produktionslinie zurück zum Reinigen, Prüfen und Einsortieren in die Lagerboxen gebracht.

Um den hiermit verbundenen manuellen Aufwand zu reduzieren, ist von der Anmelderin ein vollautomatisiertes Abblocksystem unter der Handelsbezeichnung ART-Deblocker-A erhältlich, welches aus Transportkästen bearbeitete Brillenlinsen im geblockten Zustand lädt, diese sodann vom Blockstück trennt und die abgeblockten Brillenlinsen schließlich zurück in die Transportkästen legt. Hierbei separiert das Abblocksystem Blockstück, Blockmaterial und Brillenlinse per Wasserstrahl und trocknet danach auch Vorder- und Rückseite der jeweiligen Brillenlinse zur Vorbereitung auf die Inspektion. Für eine möglichst effiziente Wiederverwendung der Blockstücke ist dieses Abblocksystem schließlich auch in der Lage, die Blockstücke nach Durchmesser und Krümmung zu sortieren und in den entsprechenden Lagerboxen abzulegen.

Schließlich ist in der vorerwähnten ART-Informationsschrift auch ein vom eigentlichen Abblocksystem getrenntes Blocksortiersystem angesprochen, welches in der Lage ist, aus der Produktionslinie zurückkommende, gebrauchte Blockstücke nach Durchmesser und Krümmung zu sortieren und dabei aufgrund des DMC des jeweiligen Blockstücks ebenfalls zu berücksichtigen, wie oft ein Blockstück bereits verwendet wurde, als Entscheidungskriterium dafür, ob das jeweilige Blockstück noch weiter zu verwenden oder aber auszusortieren ist.

Der insoweit beschriebene Stand der Technik erfüllt zwar die funktionalen Anforderungen zur Fertigung von individuellen Brillenlinsen nach Rezept. Die angesprochenen manuellen Arbeitsschritte bedingen indes einen gewissen Aufwand, der mit zusätzlichen Kosten verbunden ist. Außerdem besteht die Gefahr, dass bestimmten Rezeptaufträgen falsche Blockstücke zugeordnet werden. Nicht zuletzt erfordern die vorbeschriebenen Automationsansätze eine große Stellfläche und eine relativ hohe Investition pro gespeichertem Blockstück.

### AUFGABENSTELLUNG

Der Erfindung liegt die Aufgabe zugrunde, ein Verfahren zur Fertigung von individuellen Brillenlinsen nach einem Rezeptauftrag anzugeben, welches es ermöglicht, eine ausreichende Anzahl an Blockstücken platzsparend und mit möglichst wenig Aufwand zu transportieren, zu speichern und bei Bedarf abzurufen.

### DARSTELLUNG DER ERFINDUNG

Diese Aufgabe wird durch ein Verfahren zur Fertigung von individuellen Brillenlinsen nach einem Rezeptauftrag mit den Merkmalen des Patentanspruchs 1 oder 2 gelöst. Vorteilhafte Ausgestaltungen der Erfindung sind Gegenstand der Patentansprüche 3 bis 11.

Bei einem Verfahren zur Fertigung von individuellen Brillenlinsen nach einem Rezeptauftrag, welches die folgenden Hauptschritte (i) bis (iii) umfasst: (i) Blocken eines bereitgestellten Linsenrohlings als Werkstück, der eine erste Fläche, eine zweite Fläche entgegengesetzt der ersten Fläche und einen Rand zwischen der ersten Fläche und der zweiten Fläche hat, auf ein von einer Mehrzahl von Blockstücken aus einem Blockstücklager bereitgestelltes Blockstück mit Hilfe eines Blockmaterials, wobei die erste Fläche des Linsenrohlings einer Linsenbefestigungsfläche des Blockstücks zugewandt ist, (ii) Behandeln des geblockten Linsenrohlings zumindest an der zweiten Fläche, um eine geblockte behandelte Brillenlinse als Werkstück zu erhalten, und (iii) Abblocken der behandelten Brillenlinse von dem Blockstück, wobei das Werkstück, jeweils ggf. im geblockten Zustand, zwischen den Schritten (i) bis (iii) in einem von mehreren vorgehaltenen Transportkästen transportiert wird; werden erfindungsgemäß die Blockstücke vor dem Schritt (i) des Blockens in den Transportkästen in dem Blockstücklager gespeichert und für den Schritt (i) des Blockens in den Transportkästen aus dem Blockstücklager bereitgestellt und/oder nach dem Schritt (iii) des Abblockens in den Transportkästen zu dem Blockstücklager transportiert.

Mit anderen Worten gesagt basiert die erfindungsgemäße Lösung darauf, die Blockstücke und Transportkästen nicht getrennt voneinander zu behandeln, d.h. zu transportieren bzw. zu speichern, sondern hierzu die ohnehin zu transportierenden und zwischenzulagernden Transportkästen als - fahrenden und/oder festen - Blockstückspeicher zu nutzen. Die mit der Trennung von Blockstück und Transportkasten bzw. (Wieder)Zuordnung von Blockstück zu Transportkasten verbundenen, insbesondere manuellen Tätigkeiten und der damit verbundene Aufwand können weitestgehend vermieden werden. Die Identifizierung der in den Transportkästen verbleibenden Blockstücke kann dabei leicht über z.B. RFID oder DMC an den Transportkästen und/oder Blockstücken erfolgen. Da die Transportkästen ohnehin gelagert werden müssen und immer mindestens halb so viele Transportkästen vorzuhalten sind wie Blockstücke, entsteht kein zusätzlicher Platzbedarf. Vielmehr kann gegenüber einer herkömmlichen Lösung eines der Lager für Transportkästen und Blockstücke eingespart werden, was sowohl Kosten- als auch Stellflächenvorteile bietet.

Im Ergebnis können die erfindungsgemäßen Maßnahmen insbesondere bei einer maximierten Automatisierung unter weitestgehendem Ausschluss manueller Transport-, Sortier- oder Zuordnungsarbeiten einer Minimierung sowohl diesbezüglicher Fehler als auch der Durchlaufzeiten für Rezeptaufträge dienen, was eine schnellere Lieferfähigkeit qualitativ hochwertiger Brillenlinsen ermöglicht. Zugleich wird der mit der Fertigung von individuellen Brillenlinsen nach Rezept verbundene vorrichtungstechnische Aufwand durch Einsparung einer der Speicher für Transportkästen und Blockstücke und der damit verbundenen, zusätzlichen Stellfläche deutlich reduziert. Es kommt somit gleich in mehrfacher Hinsicht zu einer erheblichen Effizienzsteigerung im Fertigungsablauf, insbesondere wenn in einem vollständig geschlossenen Kreislauf ("Closed Loop") gearbeitet mit, mit Transport und Lagerung der Blockstücke in den Transportkästen auch zwischen dem Schritt (iii) des Abblockens und dem Schritt (i) des Blockens.

Ein Teil der Vorteile des erfindungsgemäßen Verfahrens ergibt sich bereits bei einer Fertigung von Brillenlinsen, bei der ein Blockstücktyp oder einige wenige Blockstücktypen zum Einsatz kommen. Besonders vorteilhaft ist das erfindungsgemäße Verfahren aber dann, wenn in dem mit wenigstens einem Lagerbereich versehenen Blockstücklager in den Transportkästen Blockstücke mit verschiedenen, vorbestimmten Blockstückgeometrien vorgehalten werden, die sich im Hinblick auf eine Blockkrümmung der Linsenbefestigungsfläche und/oder einem Durchmesser der Linsenbefestigungsfläche unterscheiden, wobei die Transportkästen und/oder die Blockstücke mit einem Informationsträger versehen sind, der bei Erfassung über eine Prozesssteuerung insbesondere zur Sortierung des Blockstücklagers und ggf. die Bereitstellung bestimmter Blockstücke für den Schritt (i) des Blockens wenigstens Information über die Blockstückgeometrie der im jeweiligen Transportkasten enthaltenen Blockstücke gibt. So können z.B. in einem konkreten Einsatzfall sechsunddreißig individuelle Blockstücktypen vorgesehen sein, mit sechs verschiedenen Durchmessern der Linsenbefestigungsfläche und sechs verschiedenen Blockkrümmungen daran, bei entsprechender Verwaltung des Blockstücklagers über die Prozesssteuerung. Dies wäre bei einem Einsatz des erfindungsgemäßen Verfahrens im Rahmen der vorbeschriebenen ART-Technologie ein bevorzugter Ansatz.

In diesem Fall - mehrere verschiedene Blockstücktypen - kann in weiterer vorteilhafter Ausgestaltung der Erfindung das Blockstücklager einen flexiblen Kastenspeicher als Lagerbereich umfassen, in dem die Transportkästen mit den darin aufgenommenen Blockstücken auf festen Lagerplätzen chaotisch eingelagert werden, wobei eine Zuordnung des jeweiligen Lagerplatzes zum darauf gelagerten Transportkasten nach Maßgabe der Information des entsprechenden Informationsträgers erfolgt. Ein solches Lagerverfahren ist sehr flexibel und kann problemlos und schnell durchgeführt werden. Der nächste freie Lagerplatz im flexiblen Kastenspeicher wird einfach durch einen gerade ankommenden, im Hinblick auf die darin enthaltenen Blockstücke identifizierten Transportkasten unter Zuhilfenahme eines geeigneten Handhabungssystems belegt, worauf eine Lagerplatznummer zu dem entsprechenden Blockstücktyp von der Prozesssteuerung abgespeichert wird. Wird dieser Blockstücktyp wieder benötigt, kann über die zugeordnete Lagerplatznummer der entsprechende Transportkasten mittels des Handhabungssystems wieder entnommen und ausgegeben werden. Dies kann bevorzugt nach einem "First In / First Out"-Prinzip (kurz "FIFO"-Prinzip) erfolgen, d.h. der zuerst im flexiblen Kastenspeicher mit einem bestimmten Blockstücktyp abgelegte Transportkasten verlässt den Kastenspeicher auch als erster wieder, wenn der entsprechende Blockstücktyp angefordert wird.

In weiterer bevorzugter Ausgestaltung kann vorgesehen sein, dass das Blockstücklager ein unsortiertes Pufferlager als Lagerbereich umfasst, in dem die Transportkästen mit den darin aufgenommenen Blockstücken unsortiert eingelagert werden, wobei vorzugsweise eine Stapelung der Transportkästen erfolgt. Dieses Vorgehen ermöglicht in platzsparender Weise eine schnelle Aufnahme von Transportkästen im Blockstücklager, wenn darin die anderen Lagerkapazitäten erschöpft oder gerade ausgelastet sind, was z.B. dann der Fall sein kann, wenn die Fertigung langsam oder verlangsamt läuft.

Es ist weiterhin bevorzugt, wenn das Blockstücklager ein sortiertes Pufferlager als Lagerbereich umfasst, in dem die Transportkästen mit den darin aufgenommenen Blockstücken entsprechend der Information des Informationsträgers nach Blockstückgeometrie sortiert eingelagert werden, wobei vorzugsweise eine Stapelung der Transportkästen mit jeweils gleichen Blockstücken erfolgt. Somit können auf einfache und raumsparende Weise in den Transportkästen Blockstücke vorgehalten werden, die häufig benutzt werden (sogenannte "high runner"), und auf Anforderung schnell wieder aus dem Blockstücklager abgegeben werden.

Im weiteren Verfolg des Erfindungsgedankens kann das Blockstücklager einen Lagereingang und einen Lagerausgang aufweisen, die über eine Förderstrecke für die Transportkästen miteinander verbunden sind, welche an den bzw. an die Lagerbereiche angeschlossen ist, wobei die Transportkästen mit den darin aufgenommenen Blockstücken über die Förderstrecke von der Prozesssteuerung gesteuert wahlweise von dem Lagereingang zu dem jeweiligen Lagerbereich, von dem jeweiligen Lagerbereich zum Lagerausgang oder von dem Lagereingang direkt zum Lagerausgang gefördert werden, was eine sehr flexible Speicherung der Blockstücke im Blockstücklager gestattet, die eine schnelle Reaktion auf Auslastungsschwankungen in der Fertigungslinie ermöglicht.

In einer ersten Verfahrensalternative kann die Steuerung des Blockstücklagers so erfolgen, dass für den Schritt (i) des Blockens die Bereitstellung des jeweiligen Blockstücks über die Prozesssteuerung nach Maßgabe einer durch den Rezeptauftrag definierten Geometrie der zu fertigenden Brillenlinse durch Ausgabe des mit dem entsprechenden, über den Informationsträger identifizierten Blockstück beladenen Transportkastens aus dem Blockstücklager erfolgt. Für die meisten Fälle stellt dies die gebotene Verfahrensweise dar, weil der Rezeptauftrag den nächsten Produktionsvorgang auch zeitlich bestimmt.

In einer zweiten Verfahrensalternative hingegen kann - unter Zuhilfenahme der vorbeschriebenen "Bypass"-Möglichkeit mittels der direkten Förderstrecke zwischen Lagereingang und Lagerausgang im Blockstücklager - die Prozesssteuerung so erfolgen, dass für den Schritt (i) des Blockens über die Prozesssteuerung die Bereitstellung eines bestimmten Linsenrohlings nach Maßgabe der Information des Informationsträgers zur Blockstückgeometrie des Blockstücks erfolgt, welches in dem Transportkasten enthalten ist, der aktuell über die Förderstrecke zwischen Lagereingang und Lagerausgang gefördert wird. Eine solche Verfahrensweise dürfte sich z.B. anbieten, wenn der eigentlich als Nächstes - z.B. aufgrund des zeitlichen Auftragseingangs - abzuarbeitende Rezeptauftrag Blockstücke erfordern würde, auf die im Blockstücklager gerade kein oder kein schneller Zugriff möglich ist. Dies ist u.a. auch einer möglichst hohen und gleichmäßigen Auslastung der Fertigungslinie förderlich.

Einer gleichbleibend hohen Qualität der Fertigung ist es weiterhin förderlich, wenn die Prozesssteuerung bei Erfassung des Informationsträgers auch Information über eine Häufigkeit der Benutzung der in den jeweiligen Transportkästen enthaltenen Blockstücke hat, wobei dem Blockstücklager vorgelagert eine Weiche angeordnet ist, die mittels der Prozesssteuerung nach Maßgabe dieser Information so angesteuert wird, dass die Weiche bei Überschreitung einer vorbestimmten Häufigkeit der Benutzung die entsprechenden Transportkästen zur manuellen Abholung und Reinigung von Blockstück und/oder Transportkasten ausschleust, ansonsten aber die entsprechenden Transportkästen mit den darin aufgenommenen Blockstücken an das Blockstücklager weiterleitet. Dies führt auch zu einer Vereinheitlichung der Kontroll- bzw. Reinigungsvorgänge an den Blockstücken und Transportkästen, was ebenfalls zu einer hohen Produktivität beiträgt.

Grundsätzlich können die Informationsträger an den Transportkästen und/oder den Blockstücken lediglich lesbar sein und gelesen werden, wie dies z.B. bei einem Rezeptauftrag aus Papier am Transportkasten oder einem DMC am Blockstück der Fall ist. Bevorzugt ist es indes, wenn die Informationsträger an den Transportkästen und/oder den Blockstücken sowohl lesbar als auch mit Information beschreibbar sind, wobei die Information der jeweiligen Informationsträger durch Beschreiben vor dem Schritt (i) des Blockens im Hinblick auf eine Dringlichkeit des jeweiligen Rezeptauftrags und/oder bei dem Schritt (i) des Blockens hinsichtlich von für den Schritt (ii) des Behandelns relevanten Blockparametern und/oder während des Schritts (ii) des Behandelns im Hinblick auf Geometrieänderungen der jeweiligen Blockstücke und/oder nach dem Schritt (iii) des Abblockens hinsichtlich einer Notwendigkeit zur Reinigung der jeweiligen Blockstücke zur Berücksichtigung in jeweiligen Folgeschritten geändert oder erweitert wird. Somit sollte nicht nur die Prozesssteuerung im Besitz der für die Folgeschritte relevanten Information sein, sondern der jeweilige Transportkasten bzw. das jeweilige Blockstück selbst trägt diese Information in redundanter Weise, was zur Erhöhung der Ausfall-, Funktions- und Betriebssicherheit in der Fertigungslinie dienen kann. Schließlich gestattet dies auch einer Bedien- oder Kontrollperson mit geeigneter Auslesemöglichkeit, einen entsprechenden Status des jeweiligen Rezeptauftrags im Transportkasten ohne Zugriff auf die Prozesssteuerung festzustellen, was z.B. im Rahmen von Qualitätssicherungsmaßnahmen von Vorteil sein kann oder aber wenn ein Transportkasten - aus welchen Gründen auch immer - vorübergehend aus der Fertigungslinie zu entnehmen war.

### KURZE BESCHREIBUNG DER ZEICHNUNGEN

Im Folgenden wird die Erfindung anhand eines bevorzugten Ausführungsbeispiels unter Bezugnahme auf die beigefügten, teilweise vereinfachten bzw. schematischen Zeichnungen näher erläutert. In den Zeichnungen zeigen:
- Fig. 1: ein Layout einer Produktionsstätte zur Fertigung von individuellen Brillenlinsen nach Rezeptauftrag, in der das erfindungsgemäße Verfahren durchgeführt werden kann, wobei ein Blockstücklager für bei der Fertigung verwendete Blockstücke sowie ein Fertigstellungsbereich für die Brillenlinsen und Brillen lediglich als leere Blöcke dargestellt sind;
- Fig. 2: das Blockstücklager des Fertigungslayouts gemäß Fig. 1 entsprechend dem Block II in Fig. 1;
- Fig. 3: der Fertigstellungsbereich für die Brillenlinsen und Brillen des Fertigungslayouts gemäß Fig. 1 entsprechend dem Block III in Fig. 1;
- Fig. 4: eine perspektivische Ansicht eines leeren Transportkastens von schräg oben / vorne rechts, der bei der Durchführung des erfindungsgemäßen Verfahrens in dem Fertigungslayout gemäß Fig. 1 zum Einsatz kommen kann;
- Fig. 5: eine perspektivische Ansicht des leeren Transportkastens gemäß Fig. 4 von schräg unten / vorne rechts;
- Fig. 6: eine perspektivische Ansicht des Transportkastens gemäß Fig. 4 von schräg oben / vorne rechts, der nach einem Rezeptauftrag mit zwei Linsenrohlingen und zwei Blockstücken bestückt ist, um in dem Fertigungslayout von Fig. 1 zu einer Blockstation transportiert zu werden;
- Fig. 7: eine Draufsicht auf den gemäß Fig. 6 bestückten Transportkasten von Fig. 4;
- Fig. 8: eine in der Zeichnungsebene um 180° gedrehte Schnittansicht des gemäß Fig. 6 bestückten Transportkastens von Fig. 4 entsprechend der Schnittverlaufslinie VIII-VIII in Fig. 7;
- Fig. 9: eine in der Zeichnungsebene um 90° im Uhrzeigersinn gedrehte Schnittansicht des gemäß Fig. 6 bestückten Transportkastens von Fig. 4 entsprechend der Schnittverlaufslinie IX-IX in Fig. 7;
- Fig. 10: eine perspektivische Ansicht des Transportkastens gemäß Fig. 4 von schräg oben / vorne rechts, in dem die auf den Blockstücken aufgeblockten Linsenrohlinge aufgenommen sind, um in dem Fertigungslayout von Fig. 1 zu einer Vorbearbeitungsstation transportiert zu werden; und
- Fig. 11: eine perspektivische Ansicht des Transportkastens gemäß Fig. 4 von schräg oben / vorne rechts, in dem zwei behandelte und gerandete Brillenlinsen, die zwei Blockstücke, auf denen die Behandlung erfolgte, sowie ein passendes Brillengestell aufgenommen sind, um in dem Fertigstellungsbereich des Fertigungslayouts von Fig. 1 gemäß Fig. 3 nach Verlassen eines Brillengestelllagers zu einer Station für die Rahmenmontage, Endkontrolle und Verpackung transportiert zu werden.

### DETAILLIERTE BESCHREIBUNG DES AUSFÜHRUNGSBEISPIELS

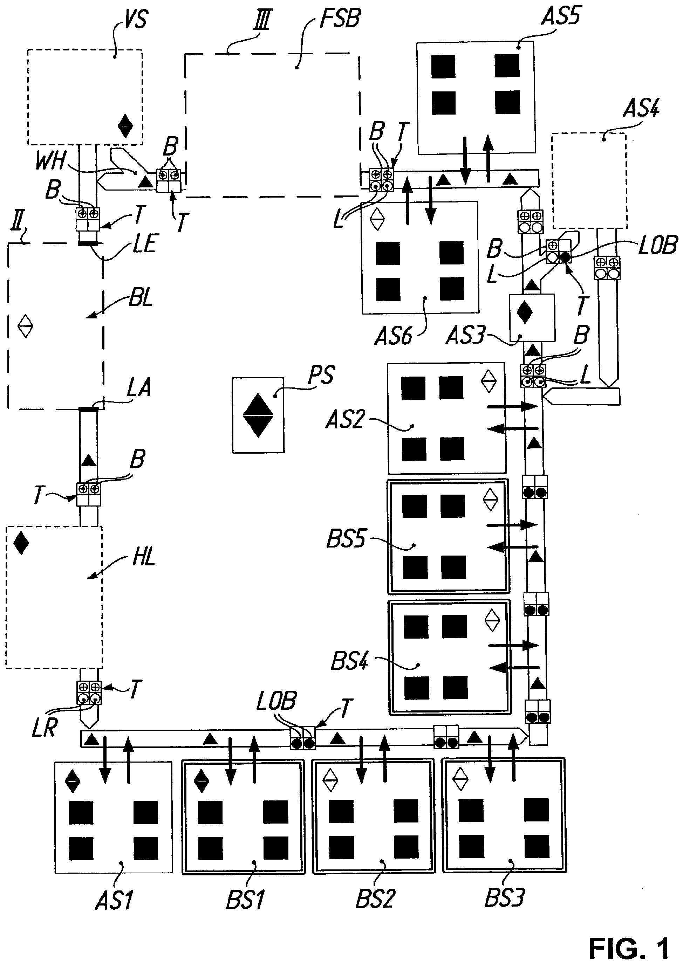

Die Fig. 1 zeigt ein Layout einer Produktionsstätte zur Fertigung von individuellen Brillenlinsen L nach einem Rezeptauftrag, in der, wie nachfolgend noch näher beschrieben wird, bei der Fertigung allgemein die folgenden Schritte in der angegebenen Reihenfolge durchlaufen werden: (i) Blocken eines bereitgestellten Linsenrohlings LR auf ein Blockstück B, welches von einer Mehrzahl von Blockstücken B aus einem Blockstücklager BL bereitgestellt wird, (ii) Behandeln des geblockten Linsenrohling LR, um eine geblockte behandelte Brillenlinse L zu erhalten, und (iii) Abblocken der behandelten Brillenlinse L von dem Blockstück B. Die jeweiligen Werk- und Blockstücke für einen Rezeptauftrag werden zwischen den vorgenannten Schritten (i) bis (iii) in einem von mehreren vorgehaltenen Transportkästen T transportiert. Bei dem hier beschriebenen Ausführungsbeispiel bestehen zudem zwei Besonderheiten, wie nachfolgend noch im Detail erläutert wird, nämlich zum einen, dass die Blockstücke B vor dem Schritt (i) des Blockens in den Transportkästen T in dem Blockstücklager BL gespeichert und für den Schritt (i) des Blockens in den Transportkästen T aus dem Blockstücklager BL bereitgestellt werden, und zum anderen, dass die Blockstücke B nach dem Schritt (iii) des Abblockens in den Transportkästen T zu dem Blockstücklager BL transportiert werden.

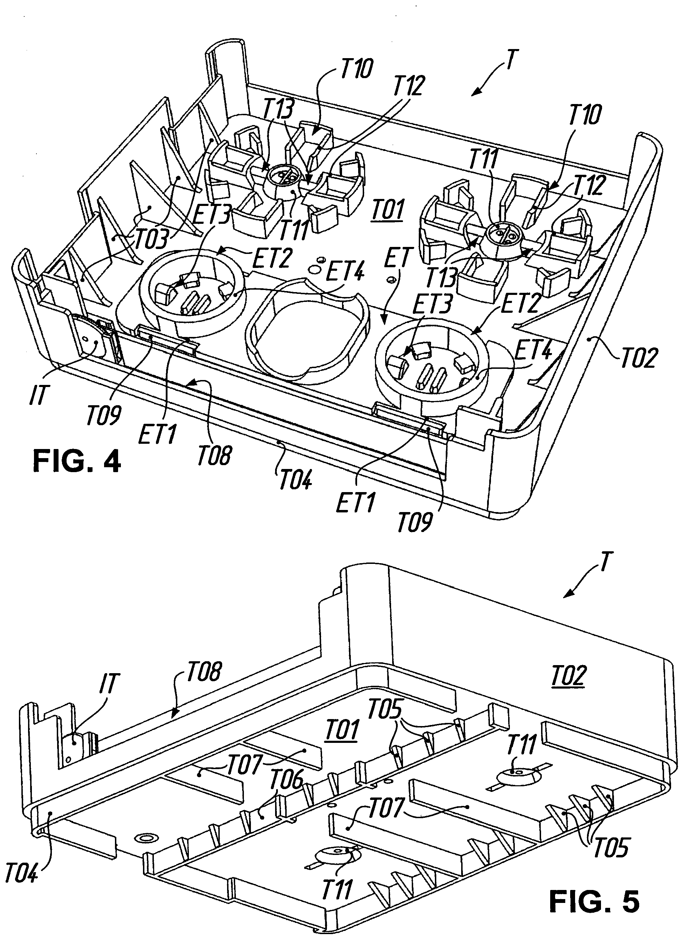

Bevor weitere Details des Fertigungslayouts von Fig. 1 und des darin ablaufenden Fertigungsverfahrens beschrieben werden, sollen unter Bezugnahme auf die Fig. 4 bis 11 zunächst Aufbau und Funktion der bei der Fertigung benutzten Transportkästen T erläutert werden.

Gemäß insbesondere den Fig. 4 und 5 weist der vorzugsweise aus einem geeigneten Kunststoff spritzgegossene Transportkasten T einen im Wesentlichen rechteckigen Kastenboden T01 auf, von dessen Rand sich auf der Oberseite des Transportkastens T eine umlaufende Kastenwand T02 nach oben wegerstreckt, die mit dem Kastenboden T01 einen annähernd rechten Winkel einschließt und auf den Querseiten des Transportkastens T gegenüber dem Kastenboden T01 mit einer Mehrzahl von Rippen T03 versteift ist.

Auf der Unterseite des Transportkastens T erstreckt sich im Wesentlichen umlaufend ein Schürzenabschnitt T04 annähernd rechtwinklig von dem Kastenboden T01 weg, und zwar mit geringem Versatz zum Rand des Kastenbodens T01 nach innen. Hierdurch ist der Transportkasten T stapelfähig, wobei der Schürzenabschnitt T04 eines im Stapel oberen Transportkastens T in eine Öffnung eintaucht, die durch die Kastenwand T02 eines darunterliegenden Transportkastens T nach außen begrenzt ist. Durch unterschiedliche Ausgestaltung der Querseiten eines Transportkastens T im Bereich der Kastenwand T02 und des Schürzenabschnitts T04 - siehe die Fig. 4 und 5 jeweils auf der linken bzw. rechten Seite des Transportkastens T - wird hierbei sichergestellt, dass die Transportkästen T nur in einer gegenseitigen Längsausrichtung aufeinander gestapelt werden können, nicht aber um 180° verdreht zueinander.

Auch der Schürzenabschnitt T04 ist gegenüber dem Kastenboden T01 an den Längsseiten des Transportkastens T mittels einer Mehrzahl von Rippen T05 versteift, wie insbesondere in Fig. 5 zu sehen ist. Ferner erstrecken sich gemäß Fig. 5 auf der Unterseite des Transportkastens T ein ebenfalls mittels Rippen T05 gegenüber dem Kastenboden T01 ausgesteifter, auf dem Kastenboden T01 nahe der Mitte liegender Längssteg T06 und mehrere an dem Schürzenabschnitt T04 rechtwinklig nach innen anschließende Querstege T07 über dem Kastenboden T01. Der Schürzenabschnitt T04, der Längssteg T06 und die Querstege T07 des Transportkastens T besitzen bezogen auf den Kastenboden T01 dieselbe Höhe, so dass der Transportkasten T hierauf sicher abgestellt werden kann, sei es z.B. auf einem ebenen Tisch bei der Bestückung des Transportkastens T oder etwa für den Transport des Transportkastens T auf einem Transportband od.dgl.

Gemäß insbesondere Fig. 4 ist die Kastenwand T02 auf einer in Fig. 4 vorderen Längsseite des Transportkastens T mit einem Schlitz T08 versehen, der prinzipiell dazu dient, einen Rezeptauftrag aus Papier als Informationsträger aufzunehmen. Im dargestellten Ausführungsbeispiel ist in dem Schlitz T08 anstelle eines Papiers ein Informationsträger IT in Form eines RFID aufgenommen, der in an sich bekannter Weise sowohl gelesen als auch beschrieben werden kann.

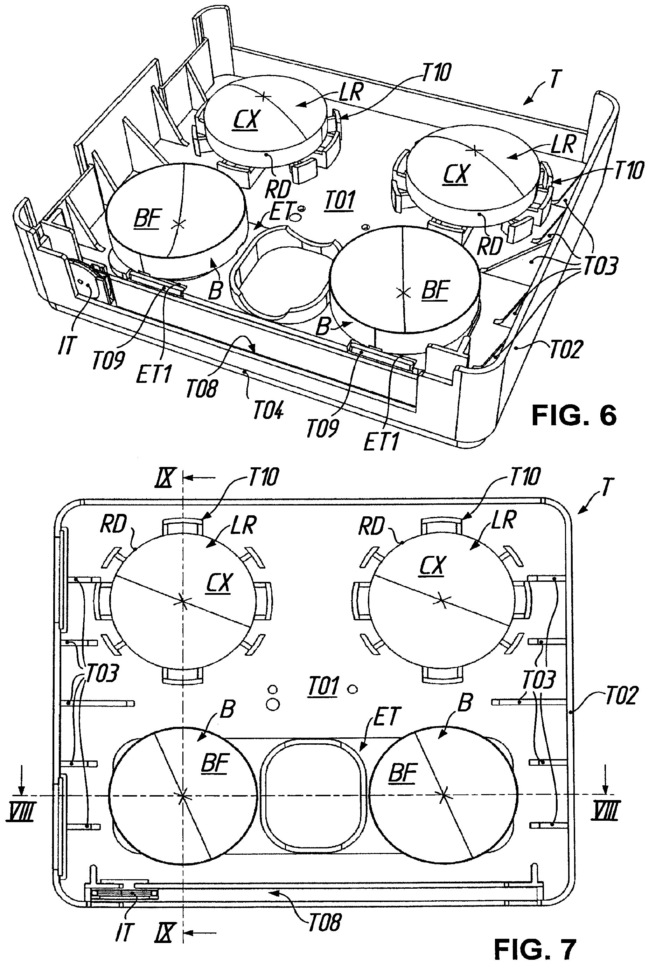

Dem Schlitz T08 benachbart ist am Kastenboden T01 ein Einsatzteil ET aus Kunststoff gehalten, welches zur formschlüssigen Aufnahme von zwei Blockstücken B ausgebildet ist, wie die Fig. 6 bis 9 zeigen. Das Einsatzteil ET ist hierbei über vom Kastenboden T01 vorstehende Stege T09 in Längs- und Querrichtung des Transportkastens T formschlüssig gehalten, die in zugeordneten Aussparungen ET1 des Einsatzteils ET eingreifen. Das Einsatzteil ET besitzt in bezüglicher einer Querachse des Einsatzteils ET spiegelsymmetrischer Anordnung zwei im Wesentlichen hohlzylindrische Aufnahmeabschnitte ET2 für die Blockstücke B, die nachfolgend kurz beschrieben werden sollen.

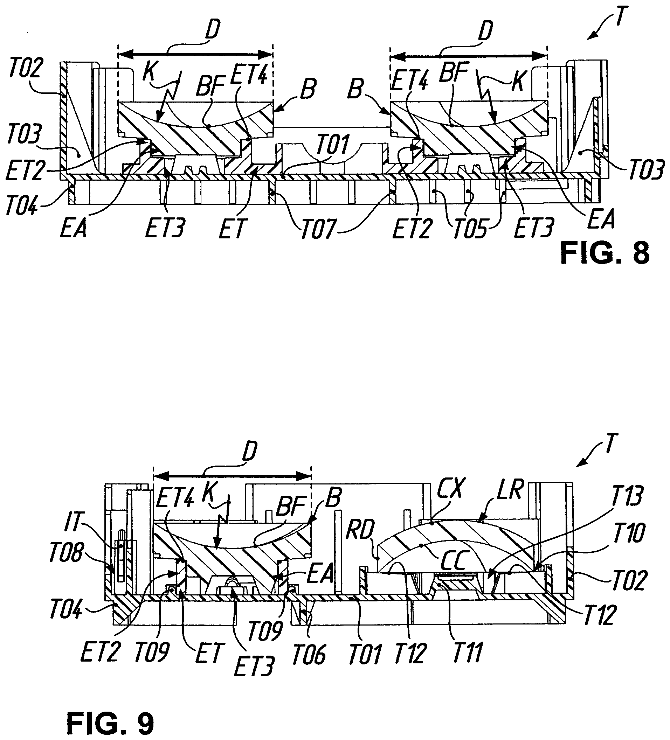

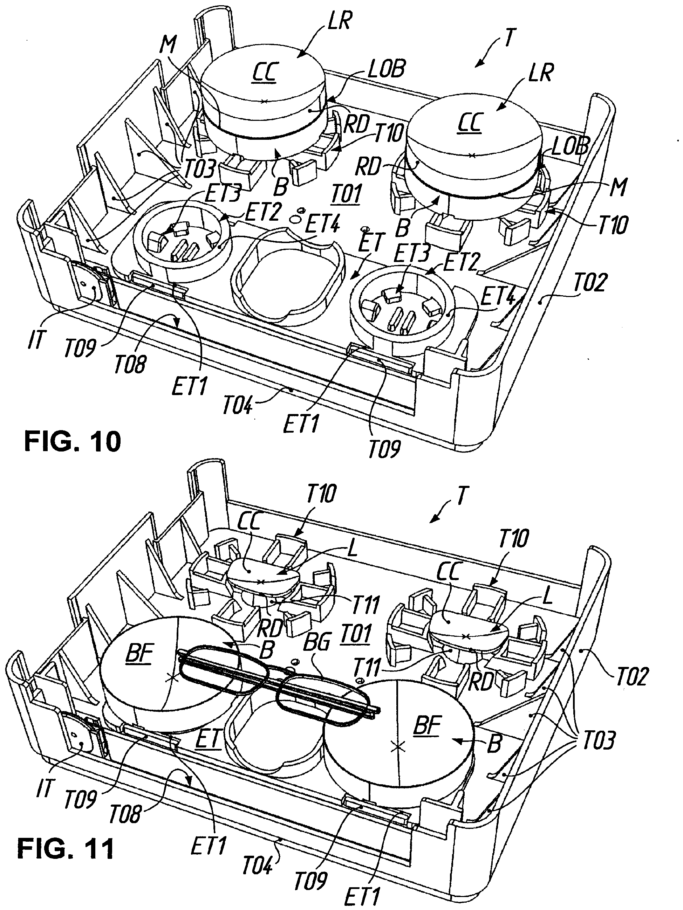

Wie die Schnittansichten gemäß den Fig. 8 und 9 zeigen, hat jedes Blockstück B in bekannter Ausgestaltung allgemein einen aus einem geeigneten Kunststoff bestehenden, im Wesentlichen rotationssymmetrischen Grundkörper. Der Grundkörper des Blockstücks B weist auf der einen, in den Fig. 8 und 9 oberen Seite eine Linsenbefestigungsfläche BF auf, welche einen vorbestimmten Durchmesser D und eine definierte Blockkrümmung K besitzt und auf die der Linsenrohling LR mittels eines Blockmaterials M (siehe Fig. 10) geblockt werden kann. Auf der anderen, in den Fig. 8 und 9 unteren Seite hat das Blockstück B einen standardisierten Einspannabschnitt EA, über den der auf dem Grundkörper geblockte Linsenrohling LR in einer Maschine oder Vorrichtung zur Bearbeitung bzw. Behandlung des Linsenrohlings LR fixiert werden kann. Zu weiteren Details eines geeigneten Blockstücks B sei an dieser Stelle ausdrücklich auf die vorerwähnte Informationsschrift der Anmelderin sowie die Druckschrift EP 2 093 018 A1 verwiesen. Beispiele für geeignete Blockmaterialien M sind indes der Druckschrift EP 2 011 604 A1 zu entnehmen, auf die hiermit ebenfalls ausdrücklich verwiesen sei. Anstelle der dort offenbarten lichtaushärtenden Blockmaterialien können natürlich auch andere Blockmaterialien, beispielsweise thermoplastische Kunststoffmaterialien zum Einsatz kommen.

Innerhalb der Aufnahmeabschnitte ET2 sind nahe dem Kastenboden T01 des Transportkastens T mehrere Vorsprünge ET3 am Einsatzteil ET angeformt, die zu entsprechenden Aussparungen im Einspannabschnitt EA des jeweiligen Blockstücks B komplementäre Strukturen bilden. Ein Innendurchmesser der Aufnahmeabschnitte ET2 des Einsatzteils ET ist so gewählt, dass er im Wesentlichen einem Außendurchmesser der Einspannabschnitte EA der Blockstücke B entspricht, wie in den Fig. 8 und 9 zu sehen ist. Die Blockstücke B können somit eng und sicher an den Aufnahmeabschnitten ET2 des Einsatzteils ET im Transportkasten T gehalten werden. Dabei liegen die Blockstücke B mit ihren Grundkörpern auf ringförmigen Stirnflächen ET4 der Aufnahmeabschnitte ET2 auf, während die mit den Einspannabschnitten EA der Blockstücke B zusammenwirkenden Vorsprünge ET3 des Einsatzteils ET im Transportkasten T für eine (Vor)Orientierung der Blockstücke B im Drehwinkel um eine Längsachse der Blockstücke B sorgen. Wenngleich in den Figuren nicht gezeigt, können entsprechende Maßnahmen zur Aufnahme und Orientierung der Blockstücke allerdings auch direkt am Kastenboden vorgesehen sein, ohne Einsatzteil.

Auf der dem Einsatzteil ET für die Blockstücke B benachbart liegenden Oberseite des Kastenbodens T01 sind in ebenfalls spiegelsymmetrischer Anordnung bezüglich einer Querachse des Transportkastens T eine Mehrzahl von stegförmigen Aufnahmevorsprüngen T10 am Kastenboden T01 angeformt. Gemäß den Fig. 4 und 7 sind die Aufnahmevorsprünge T10 jeweils im Kreis sternartig um einen von zwei zentralen Fortsätzen T11 am Kastenboden T01 gruppiert. Hierbei fallen obere Stirnflächen T12 der Aufnahmevorsprünge T10 zu den Fortsätzen T11 hin in ihrer Höhe gegenüber dem Kastenboden T01 ab, wie am besten in den Fig. 4 und 9 zu erkennen ist, wodurch auf den Aufnahmevorsprüngen T10 gemäß den Fig. 6 bis 9 aufgelegte Linsenrohlinge LR bzw. Brillenlinsen L (Fig. 11) die Aufnahmevorsprünge T10 an den Stirnflächen T12 nur mit einem Randbereich berühren und zugleich eine gewisse Zentrierung erfahren.

Schließlich sind auch in diesem Bereich der Transportkästen T bei dem Bezugszeichen T13 zu den Einspannabschnitten EA der Blockstücke B komplementäre Strukturen am Kastenboden T01, den Aufnahmevorsprüngen T10 und Fortsätzen T11 ausgebildet. Dies ermöglicht es, entsprechend Fig. 10 die Linsenrohlinge LR bzw. Brillenlinsen L im aufgeblockten Zustand über die Blockstücke B formschlüssig gesichert und lageorientiert in den Transportkästen T aufzunehmen und zu transportieren.

Was insbesondere das Aufblocken und den aufgeblockten Zustand der Linsenrohlinge LR bzw. Brillenlinsen L sowie die hier in diesem Zusammenhang verwendete Terminologie angeht, sei an dieser Stelle bezugnehmend auf die Fig. 9 und 10 noch erwähnt, dass die bereitgestellten Linsenrohlinge LR eine erste Fläche CX, eine zweite Fläche CC entgegengesetzt der ersten Fläche CX und einen Rand RD zwischen der ersten Fläche CX und der zweiten Fläche CC haben, wobei die erste Fläche CX des jeweiligen Linsenrohlings LR im aufgeblockten Zustand der Linsenbefestigungsfläche BF des zugeordneten Blockstücks B zugewandt ist, mit dem Blockmaterial M als (temporäres) Befestigungsmittel dazwischen. In dem hier beschriebenen, bevorzugten Ausführungsbeispiel besitzt die erste Fläche CX des jeweiligen Linsenrohlings LR vor dem Aufblocken nicht nur eine fertig vor- und feinbearbeitete Geometrie, sondern ist darüber hinaus auch schon mit einer Beschichtung versehen (Hartbeschichtung und Antireflexbeschichtung). Die eigentliche Bearbeitung bzw. Behandlung der Linsenrohlinge LR erfolgt in der hier beschriebenen Produktionsstätte also nur noch an der zweiten Fläche CC des jeweiligen Linsenrohlings LR und (ggf.) an dessen Rand RD.

In der Fig. 11 ist abschließend zu den Transportkästen T noch exemplarisch gezeigt, dass die Transportkästen T während der Fertigung der Brillenlinsen L nicht nur zur Aufnahme und für den Transport der Linsenrohlinge LR, der Blockstücke B und der bearbeiteten bzw. behandelten, wie in Fig. 11 dargestellt ggf. auch gerandeten Brillenlinsen L - jeweils je nach Bearbeitungsstatus im ungeblockten, geblockten oder abgeblockten Zustand - dienen, sondern darüber hinaus auch andere fertigungsrelevante, dem jeweiligen Rezeptauftrag zugeordnete Teile aufnehmen und transportieren können, wie beispielsweise Brillengestelle BG oder Werkzeuge (hier nicht dargestellt).

Zurückkommend auf die Fig. 1 bis 3 sollen nunmehr das Fertigungslayout von Fig. 1 und das damit durchgeführte Fertigungsverfahren näher erläutert werden. Vorabgeschickt sei an dieser Stelle noch, dass für das Fertigungsverfahren eine feste Zuordnung zwischen den Blockstücken B und den Transportkästen T erfolgt, wobei zugeordnete Blockstücke B und Transportkästen T stets gemeinsam gelagert und auf Transportbändern durch die Produktionsstätte transportiert werden, wie bereits erwähnt. Es wird ferner davon ausgegangen, dass in der hier gezeigten Produktionsstätte zwischen 20 und 40 im Hinblick auf den Durchmesser D und die Blockkrümmung K der Linsenbefestigungsfläche BF geometrieverschiedene Blockstücktypen zum Einsatz kommen, um vornehmlich Linsenrohlinge LR aus Kunststoffmaterialien, also duktilen Werkstoffen zu bearbeiten. Hierbei ist jedes der Blockstücke B über eine individuelle Zahlenfolge zu identifizieren, die z.B. mittels eines DMC auf dem Blockstück B angebracht ist, so dass sie beim Bestücken der Transportkästen T an den Blockstücken B erfasst und in der Prozesssteuerung PS hinterlegt werden kann.

Was die Codierung der Transportkästen T angeht, ist auf dem Informationsträger IT (RFID im vorliegenden Ausführungsbeispiel) des jeweiligen Transportkastens T zunächst eine Zahlenfolge abgespeichert, die sich aus einer ersten unveränderbaren Zahlengruppe zur Identifikation des Informationsträgers IT und damit des jeweiligen Transportkastens T sowie zwei weiteren, veränderbaren Zahlengruppen zusammensetzt.

Über die unveränderbare Zahlengruppe des Transportkastens T erfolgt in der Prozesssteuerung PS eine Verknüpfung mit der Zahlenfolge der in diesem Transportkasten T aufgenommenen Blockstücke B. Die veränderbaren Zahlengruppen des RFID des Transportkastens T hingegen dienen der Speicherung der Geometrie der jeweils zugeordneten Blockstücke B (Durchmesser D und Blockkrümmung K) im RFID des entsprechenden Transportkastens T vermittels der Prozesssteuerung PS nach Maßgabe der an den jeweiligen Blockstücken B erfassten DMC.

In den meisten Fällen werden zwei Blockstücke B gleichen Typs einem Transportkasten T zugeordnet sein. Es ist natürlich aber auch möglich, dass zwei Blockstücke B verschiedenen Typs einem Transportkasten T zugeordnet sind (sogenannte "Mismatch"-Jobs im Falle einer Ungleichsichtigkeit bei dem entsprechenden Rezeptauftrag).

Zudem kann ggf. eine weitere Status- oder Geometrieinformation auf dem RFID des Transportkastens T abgespeichert werden. Die vorbeschriebene Verknüpfung der individuellen Blockstück-Zahlenfolge mit der unveränderbaren Zahlengruppe des jeweiligen Transportkastens T ermöglicht für jedes einzelne Blockstück B durch Erfassung des Informationsträgers IT des zugeordneten Transportkastens T z.B. eine Speicherung der Anzahl der Blockvorgänge für dieses Blockstück B in der Prozesssteuerung PS.

In den Fig. 1 bis 3 ist schematisch dargestellt, wie die Transportkästen T auf Förderbändern durch die Brillenlinsenfertigung transportiert werden, wobei die oben unter Bezugnahme auf die Fig. 4 bis 11 vorbeschriebenen Lagerpositionen jedes Transportkastens T durch vier Quadrate angedeutet sind. Je nach Bearbeitungsfortschritt der in den Transportkästen T transportierten Linsenrohlinge LR bzw. Brillenlinsen L sind folgende Bestückungszustände zu sehen:
a) Die zwei oberen Quadrate enthalten jeweils einen Kreis mit einem Kreuz, während die zwei unteren Quadrate leer sind: In den entsprechenden Transportkästen T befinden sich lediglich Blockstücke B.
b) Die zwei oberen Quadrate enthalten jeweils einen Kreis mit einem Kreuz, während in den zwei unteren Quadraten nicht ausgefüllte Kreise dargestellt sind: In den entsprechenden Transportkästen T befinden sich Blockstücke B und Linsenrohlinge LR im nicht geblockten Zustand, entsprechend den Fig. 6 bis 9.
c) Die zwei oberen Quadrate sind leer, während in den zwei unteren Quadraten ausgefüllte Kreise gezeigt sind: In den entsprechenden Transportkästen T befinden sich geblockte Linsenrohlinge LR, wie in Fig. 10 dargestellt, bzw. geblockte, behandelte Brillenlinsen L.
d) Sonderfall: Es sind u.a. ein nicht ausgefüllter und ein ausgefüllter Kreis in den Quadraten zu sehen: Bei dem Rezeptauftrag in diesem Transportkasten T gab es ein Problem beim Abblocken und/oder eine unzulässige Verschmutzung an wenigstens einer abgeblockten, behandelten Brillenlinse L.
e) Unterfall: Die zwei oberen Quadrate enthalten jeweils einen Kreis mit einem Kreuz, während in den zwei unteren Quadraten jeweils eine Ellipse dargestellt ist: In dem entsprechenden Transportkasten T befinden sich Blockstücke B und abgeblockte, behandelte sowie am Rand RD bearbeitete Brillenlinsen L
f) Weiterer Unterfall: Wie der Unterfall e), wobei zusätzlich ein Brillengestell BG.gezeigt ist: Dieser Transportkasten T ist wie in Fig. 11 dargestellt bestückt.

Ferner sind die einzelnen Arbeits- bzw. Bearbeitungsstationen mittels Symbolen gekennzeichnet, wobei unten noch näher beschriebene Arbeitsstationen AS1 bis AS9, an denen lediglich Schritte zur Vor- oder Nachbereitung der Linsenrohlinge LR bzw. Brillenlinsen L erfolgen, eine einfache Umrandung aufweisen, während nachfolgend ebenfalls noch näher beschriebene Bearbeitungsstationen BS1 bis BS6, in denen die Linsenrohlinge LR bzw. Brillenlinsen L durch Bearbeiten oder Behandeln eine Veränderung erfahren (wertschöpfende Maßnahmen an den Linsen), mit einer doppelten Umrandung versehen sind.

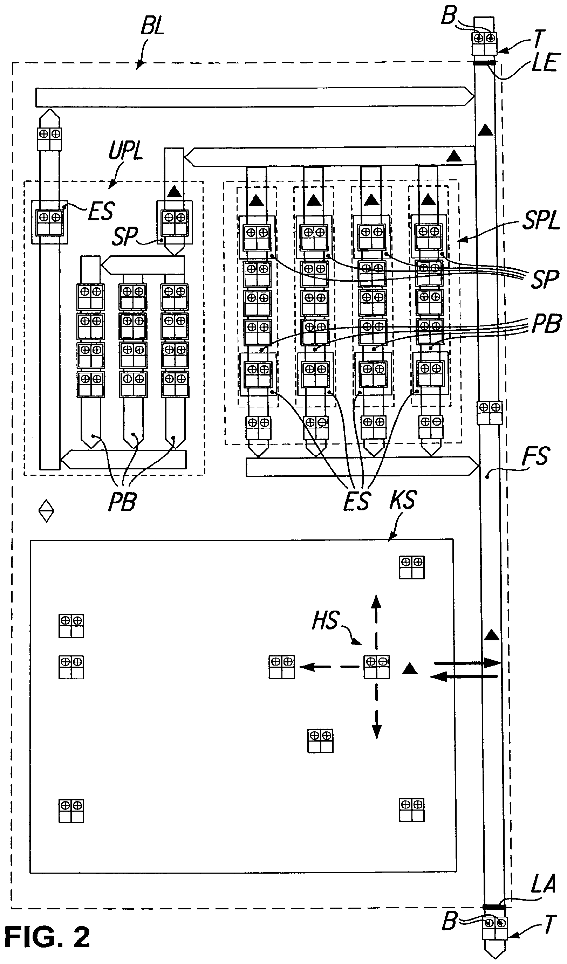

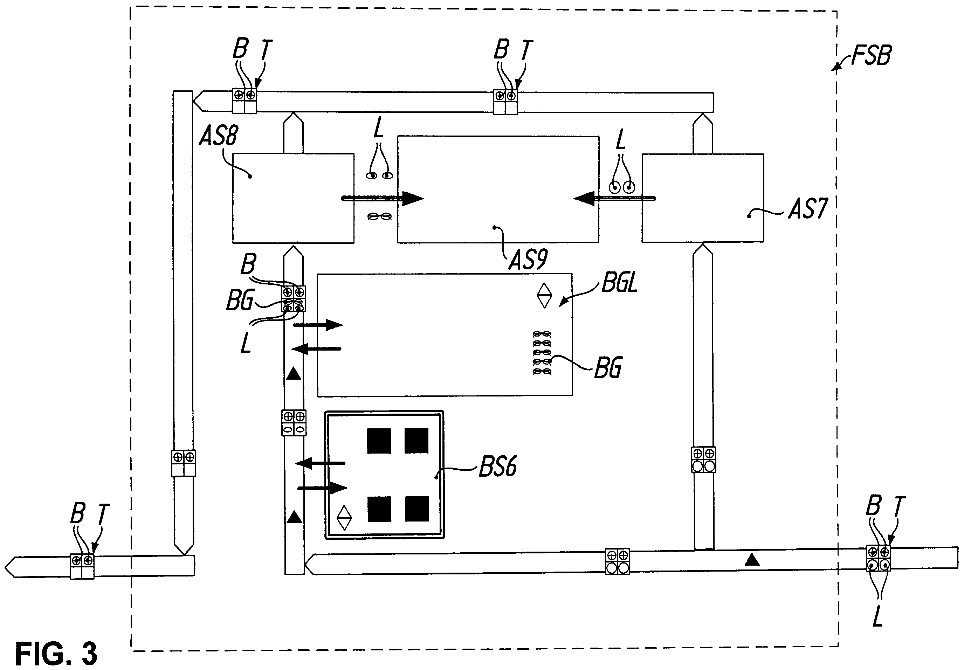

Die zentrale Prozesssteuerung PS ist in Fig. 1 durch eine Raute symbolisch gekennzeichnet. Entlang den Förderstrecken bzw. -bändern der Fertigungslinie von Fig. 1, im Blockstücklager BL gemäß Fig. 2 und im Fertigstellungsbereich FSB gemäß Fig. 3 sind mit ausgefüllten Dreiecken Erfassungseinrichtungen angedeutet, die die Transportkästen T beim Passieren automatisch erfassen und die in den Informationsträgern IT gespeicherten Informationen an die Prozesssteuerung PS weiterleiten (Lese- und Sendefunktion). Wenn etwa ein erfasster Transportkasten T in einer auf eine Erfassungseinrichtung folgenden Bearbeitungsstation bearbeitet werden soll, wird dieser Transportkasten T durch die Prozesssteuerung PS zur Bearbeitung freigegeben und in die entsprechende Bearbeitungsstation umgeleitet.

Neben diesen ausschließlich eine Lese- und Sendefunktion aufweisenden Erfassungseinrichtungen sind in den Arbeits- bzw. Bearbeitungsstationen und Lagern für Blockstücke B, Linsenrohlinge LR und Brillengestelle BG noch weitere mit Rauten gekennzeichnete Erfassungseinrichtungen vorgesehen, die mit der Prozesssteuerung PS kommunizieren und umgekehrt (Lese-, Sende- und Empfangsfunktion). Wird z.B. ein Transportkasten T über eine derartige Erfassungseinrichtung in einer Bearbeitungsstation durch die Prozesssteuerung PS erfasst, so überträgt die Prozesssteuerung PS die für den jeweiligen Rezeptauftrag hinterlegten Bearbeitungsinformationen an diese Bearbeitungsstation.

Ist diese Raute zusätzlich noch ausgefüllt dargestellt, so hat die entsprechende Erfassungseinrichtung zudem eine Schreibfunktion zum Ändern oder Erweitern der Information im Informationsträger IT des gerade vor Ort befindlichen Transportkastens T. Letztere Erfassungseinrichtungen leiten darüber hinaus fertigungsrelevante Informationen an die Prozesssteuerung PS weiter.

In der Produktionsstätte gemäß Fig. 1 läuft die Fertigung individueller Brillenlinsen L nach Rezeptauftrag nun wie folgt ab: Vor der eigentlichen Fertigung werden in einer Vorbereitungsstation VS wie oben ausführlich beschrieben ausgebildete Transportkästen T manuell mit Blockstücken B bestückt, wobei eine Verknüpfung der Blockstücke B mit dem jeweiligen Transportkasten T über die Prozesssteuerung PS wie oben erläutert erfolgt. Sodann wird der mit den Blockstücken B bestückte Transportkasten T in Richtung des Blockstücklagers BL auf ein Förderband abgesetzt.

Das Blockstücklager BL weist gemäß Fig. 2 allgemein einen Lagereingang LE und einen Lagerausgang LA auf, die über eine Förderstrecke FS für die Transportkästen T miteinander verbunden sind. Das Blockstücklager BL hat ferner drei verschiedene Lagerbereiche, nämlich ein sortiertes Pufferlager SPL, ein unsortiertes Pufferlager UPL und einen flexiblen Kastenspeicher KS. Die Förderstrecke FS ist in dem Blockstücklager BL an die Lagerbereiche angeschlossen, wobei die Transportkästen T mit den darin aufgenommenen Blockstücken B über die Förderstrecke FS von der Prozesssteuerung PS gesteuert wahlweise von dem Lagereingang LE zu dem jeweiligen Lagerbereich, von dem jeweiligen Lagerbereich zum Lagerausgang LA oder von dem Lagereingang LE direkt zum Lagerausgang LA gefördert werden.

Nach Überfahren des Lagereingangs LE werden im Blockstücklager BL die Geometrieinformationen der mit dem jeweiligen Transportkasten T mitgeführten Blockstücke B mittels einer gemäß Fig. 2 hinter dem Lagereingang LE vorgesehenen Erfassungseinrichtung wie beschrieben erfasst und der jeweilige Transportkasten T wird je nach geladenem Blockstücktyp entweder dem sortierten Pufferlager SPL oder dem flexiblen Kastenspeicher KS zugeordnet. In diesen Lagern ist individuell für jeden Blockstücktyp eine maximale Anzahl von Speicherplätzen durch die Prozesssteuerung PS reserviert. Sollten alle entsprechenden Lagerplätze belegt sein, wird der Transportkasten T in dem unsortierten Pufferlager UPL zwischengespeichert.

In dem flexiblen Kastenspeicher KS werden die Transportkästen T mit den darin aufgenommenen Blockstücken B mittels eines Handlingsystems HS auf festen Lagerplätzen chaotisch eingelagert, wobei über die Prozesssteuerung PS eine Zuordnung des jeweiligen Lagerplatzes zum darauf gelagerten Transportkasten T nach Maßgabe der Information des entsprechenden Informationsträgers IT am Transportkasten T erfolgt.

Sowohl im sortierten Pufferlager SPL als auch im unsortierten Pufferlager UPL werden jeweils mehrere Transportkästen T in Staplern SP zu einem Stapel von Transportkästen T zusammengefasst (in Fig. 2 durch eine Doppellinie um die Transportkästen T gekennzeichnet). Die jeweiligen Stapel von Transportkästen T werden sodann zur Zwischenlagerung hinter dem jeweiligen Stapler SP auf ein Pufferband PB verschoben. Um einzelne Transportkästen T zu entnehmen, werden die Stapel von Transportkästen T in Entstaplern ES wieder vereinzelt und auf die Förderstrecke FS zurückgeführt.

Während in dem sortierten Pufferlager SPL die Transportkästen T mit den darin aufgenommenen Blockstücken B entsprechend der Information des Informationsträgers IT am jeweiligen Transportkasten T nach Blockstücktyp bzw. -geometrie sortiert eingelagert werden, wobei eine Belegung der im dargestellten Ausführungsbeispiel vier Pufferbänder PB des sortierten Pufferlagers SPL mit denjenigen Transportkästen T erfolgt, die die gängigsten Typen von Blockstücken B enthalten, werden in dem unsortierten Pufferlager UPL alle überschüssigen Transportkästen T mit den darin jeweils enthaltenen Blockstücken B zwischengelagert.

Der Ausgang des unsortierten Pufferlagers UPL auf die Förderstrecke FS liegt direkt hinter dem Lagereingang LE des Blockstücklagers BL aber noch vor der dort vorgesehenen Erfassungseinrichtung, so dass die aus dem unsortierten Pufferlager UPL kommenden Transportkästen T erneut erfasst und bei Bedarf direkt in einen der beiden anderen Lagerbereiche einsortiert werden können.

Bei Vorlage eines Rezeptauftrags wird von der Prozesssteuerung PS, in Kenntnis der zu fertigenden Geometrie der Brillenlinsen L, in der Regel ein Transportkasten T mit hierzu passenden Blockstücken B aus dem Blockstücklager BL angefordert und über das Transportband zu einem Halbzeuglager HL transportiert. Hier wird der Transportkasten T erneut von der Prozesssteuerung PS erfasst und im Anschluss daran manuell oder automatisiert mit in der Regel runden oder ovalen, noch nicht gerandeten Linsenrohlingen LR beladen, die bereits an ihrer ersten Fläche CX (vgl. die Fig. 6 bis 9) fertigbearbeitet, vorzugsweise sogar schon fertig beschichtet sind (Hart- und Antireflexbeschichtung). Ist der Transportkasten T wie im vorliegenden Ausführungsbeispiel mit einem beschreibbaren Informationsträger IT bestückt, kann dieser bei Bedarf mit einem Hinweis versehen werden, der auf eine Dringlichkeit des jeweiligen Rezeptauftrags hinweist.

Für den nachfolgenden Schritt (i) des Blockens erfolgt die Bereitstellung des jeweiligen Blockstücks B über die Prozesssteuerung PS regelmäßig also nach Maßgabe der durch den Rezeptauftrag definierten Geometrie der zu fertigenden Brillenlinse L durch Ausgabe des mit dem entsprechenden, über den Informationsträger IT identifizierten Blockstück B beladenen Transportkastens T aus dem Blockstücklager BL. Als Alternative hierzu kann für den Schritt (i) des Blockens über die Prozesssteuerung PS die Bereitstellung eines bestimmten Linsenrohlings LR aber auch nach Maßgabe der Information des Informationsträgers IT zur Blockstückgeometrie des Blockstücks B erfolgen, welches in dem Transportkasten T enthalten ist, der aktuell über die Förderstrecke FS zwischen Lagereingang LE und Lagerausgang LA transportiert wird.

Als Nächstes wird der Transportkasten T zu einer Blockstation AS1 transportiert. Hier erfolgt das Blocken der Linsenrohlinge LR auf die in demselben Transportkasten T mitgebrachten Blockstücke B. Zum Blocken kommen bevorzugt Vorrichtungen zum Einsatz, wie sie in der Druckschrift WO 2009/135689 A1 ausführlich beschrieben sind, auf die hiermit bezüglich Aufbau und Funktion dieser Vorrichtungen ausdrücklich verwiesen sei. Kurz gefasst wird bei dem zum Einsatz kommenden Blockverfahren der Linsenrohling LR unter Belassung eines Spalts gegenüber dem Blockstück B positioniert, der sodann mit einem unter UV-Licht aushärtenden Blockmaterial M ausgefüllt wird, bevor das Blockmaterial M durch Bestrahlung mit UV-Licht ausgehärtet und damit der Linsenrohling LR auf dem Blockstück B fixiert wird. Die sich hierbei ergebende individuelle Blockhöhe wird an die Prozesssteuerung PS gemeldet und kann bei einem beschreibbaren Informationsträger IT ebenfalls auf diesem gespeichert werden. Anschließend werden die auf den Blockstücken B aufgeblockten Linsenrohlinge LR wieder auf die Linsenpositionen gemäß Fig. 10 in den jeweiligen Transportkasten T eingesetzt, worauf der Transportkasten T zu einer Vorbearbeitungsstation BS1 weiter transportiert wird.

In der Vorbearbeitungsstation BS1 werden die geblockten Linsenrohlinge LOB zunächst aus dem Transportkasten T entnommen und an der zweiten Fläche CC bearbeitet, in der Branche auch "Generieren" genannt. Hierbei wird die gemäß dem Rezeptauftrag zu erstellende Makrogeometrie an der zweiten Fläche CC des jeweiligen geblockten Linsenrohlings LOB spanabhebend mit Werkzeugen mit bestimmter Schneide erzeugt. Zum Einsatz kommen insbesondere sogenannte "Generatoren", die zur Bearbeitung von Kunststoffmaterialien kombiniert Fräsen und Drehen können und hierfür sowohl eine Frässpindel als auch einen Fast-Tool-Servo zum Antrieb eines Drehmeißels besitzen, wie dies etwa in der Druckschrift EP 2 011 603 A1 beschrieben ist. Bei der Fräsbearbeitung kann auch anfangs ein sogenanntes "Cribben" erfolgen, um schnell Material abzutragen, wobei der Umfang der Linsenrohlinge LR auf ein zur Ausbildung der optisch wirksamen Fläche benötigtes Maß reduziert wird. Hierbei kann es vorkommen, dass zusammen mit dem Linsenrohling LR das Blockstück B mit abzentriert wird, so dass es an der Linsenbefestigungsfläche BF einen anderen Durchmesser D erhält. Dieser kann von der Vorbearbeitungsstation BS1 an die Prozesssteuerung PS gemeldet werden, worauf die entsprechenden Blockstücke B für den nächsten Umlauf in der Fertigungslinie neu klassifiziert werden. Bei Einsatz eines beschreibbaren Informationsträgers IT kann diese Durchmesserinformation auch direkt auf dem Informationsträger IT aktualisiert werden.

Im Anschluss werden die geblockten Linsenrohlinge LOB in den jeweiligen Transportkasten T zurück geladen und über das Transportband in Richtung einer Feinbearbeitungsstation BS2 weiter transportiert. Hier erfolgt mittels einer Feinschleif- oder Poliermaschine die Feinbearbeitung der optisch wirksamen Flächen, um die Vorbearbeitungsspuren zu entfernen und die gewünschte Mikrogeometrie zu erzielen. Eine solche Poliermaschine ist z.B. aus der Druckschrift EP 2 308 644 A2 oder der Druckschrift WO 2016/058663 A1 bekannt.

Sodann geht es mittels des Transportkastens T für die geblockten Linsenrohlinge LOB weiter zu einer Markierstation BS3, in der die geblockten Linsenrohlinge LOB z.B. mittels eines Lasers graviert werden. Neben Hilfspunkten zur späteren Ausrichtung bei der Randbearbeitung können hier Markierungen für die Einbauseite, Logos, Herstellerbezeichnungen, die Additionswirkung der Brillenlinsen sowie die Auftragsnummer eingraviert werden.

Mittels des Transportkastens T werden die geblockten Linsenrohlinge LOB sodann zu einer Beschichtungsstation BS4 weiter transportiert. Dort wird zum Schutz der fertigbearbeiteten optisch wirksamen Flächen der geblockten Linsenrohlinge LOB eine Hartbeschichtung aufgebracht. Hierzu werden die geblockten Linsenrohlinge LOB zuerst automatisiert gereinigt und getrocknet, worauf sie mittels einer (Tauch- oder) Schleuderbeschichtungsanlage, wie sie z.B. in der Druckschrift US 7,748,341 B1 beschrieben ist, beschichtet werden, um behandelte geblockte Brillenlinsen L zu erhalten.

Die folgende (optionale) Vakuum-Beschichtungsstation BS5, welche die geblockten Brillenlinsen LOB in ihrem Transportkasten T erreichen, bietet die Möglichkeit, weitere Beschichtungen wie Antireflex- oder Antihaftbeschichtungen unter Vakuumbedingungen aufzubringen, wofür die geblockten Brillenlinsen LOB in der Vakuum-Beschichtungsstation BS5 zunächst zum Trocknen und Entgasen ohne die Transportkästen T durch Tunnelöfen gefahren werden.

Nach dem Beschichtungsvorgang werden die geblockten Brillenlinsen LOB mittels ihres Transportkastens T zu einer Abblockstation AS2 verbracht, wo die Brillenlinsen L automatisiert von den Blockstücken B getrennt werden, wie eingangs schon beschrieben. Eine derartige Vorrichtung zum besonders schnellen und sicheren Abblocken von optischen Werkstücken ist etwa aus der Druckschrift WO 2011/042091 A1 bekannt. Danach werden sowohl die Brillenlinsen L als auch die Blockstücke B des jeweiligen Rezeptauftrags zurück in den zugeordneten Transportkasten T gelegt.

Von der Abblockstation AS2 kommend wird der jeweilige Transportkasten T auf dem Förderband durch eine Station zur Blockmaterialresterkennung AS3 transportiert. Wenn durch die Station zur Blockmaterialresterkennung AS3 auf den im Transportkasten T enthaltenen abgeblockten Brillenlinsen L keine Blockmaterialrückstände zu detektieren sind, wird der jeweilige Transportkasten T über die Prozesssteuerung PS für den Weitertransport freigegeben und kann eine der Station zur Blockmaterialresterkennung AS3 nachgelagerte Weiche passieren. Konnten die Brillenlinsen L in der Abblockstation AS2 nicht erfolgreich abgeblockt werden oder befinden sich noch Blockmaterialreste auf den Brillenlinsen L, so wird der entsprechende Transportkasten T durch die Prozesssteuerung PS für den Weitertransport gesperrt und an der nachgelagerten Weiche in eine Station zum manuellen Ablocken und Reinigen AS4 ausgeschleust.

Nach erfolgreicher Nachbehandlung (manuelles Abblocken bzw. Reinigen der Brillenlinsen L) wird der Transportkasten T wieder vor der Station zur Blockmaterialresterkennung AS3 auf das Förderband zurückgeführt und passiert diese erneut, um zu einer Freigabe zu gelangen. Ist an der Station zur Blockmaterialresterkennung AS3 eine Verschmutzung auf oder an den Blockstücken B festgestellt worden, so wird dies an die Prozesssteuerung PS gemeldet und dieser Transportkasten T mit seinen Blockstücken B für den nächsten Umlauf gesperrt.

Die freigegebenen Brillenlinsen L und Blockstücke B gelangen sodann in ihrem Transportkasten T zu einer Reinigungsstation AS5. Hier erfolgt eine automatisierte Reinigung der Brillenlinsen L in einer Bürstenwaschstraße sowie ggf. eine manuelle Reinigung der Blockstücke B.

Danach gelangen die Brillenlinsen L und Blockstücke B mit dem zugeordneten Transportkasten T zu einer Kontrollstation AS6, in der automatisiert eine Wirkungskontrolle der Brillenlinsen L im Hinblick auf deren rezeptgemäße Wirkung erfolgt und die Brillenlinsen L zudem auf mechanische Beschädigungen, wie Kratzer und andere kosmetische Probleme geprüft werden.

Im Anschluss daran fahren die Transportkästen T mit ihren Blockstücken B und Brillenlinsen L des jeweiligen Rezeptauftrags in einen Fertigstellungsbereich FSB, der in Fig. 3 vergrößert gezeigt ist. Die Transportkästen T mit den nicht zu randenden Brillenlinsen L werden dort durch die Prozesssteuerung PS identifiziert und zu einer Station für Endkontrolle und Verpackung AS7 ausgeschleust. Dort werden die Brillenlinsen L aus dem jeweiligen Transportkasten T entnommen, kontrolliert, verpackt und ohne den Transportkasten T an einen gemeinsamen Versand AS9 für alle Brillenlinsen L bzw. Brillen weitergeleitet. Der nun lediglich noch mit den zugeordneten Blockstücken B bestückte Transportkasten T wird unterdessen weiter in Richtung des Blockstücklagers BL transportiert.

Die Transportkästen T mit den zu randenden Brillenlinsen L hingegen gelangen zusammen mit den zugeordneten Blockstücken B zu einer Randbearbeitungsstation BS6 mit wenigstens einer Vorrichtung zur Randbearbeitung von Brillenlinsen - in der Branche auch "Edger" genannt - wie sie z.B. von der Anmelderin unter der Handelsbezeichnung "ES-5" erhältlich ist. In dieser Vorrichtung werden die Brillenlinsen L aus den Transportkästen T entnommen und die Ränder der Brillenlinsen L entsprechend den in der Prozesssteuerung PS hinterlegten Bearbeitungsvorgaben so bearbeitet, dass die Brillenlinsen L in ein vorgewähltes Brillengestell BG eingesetzt werden können. Die fertiggerandeten Brillenlinsen L werden im Anschluss wieder in den Transportkasten T zu den darin enthaltenen Blockstücken B gelegt.

Wenn die Brillenlinsen L in der Produktionsstätte auch in ein Brillengestell BG montiert werden sollen, werden sie zunächst zusammen mit den Blockstücken B in dem Transportkasten T in ein Brillengestelllager BGL transportiert, in dem das entsprechende Brillengestell BG mit in den Transportkasten T geladen wird.

Auf das Brillengestelllager BGL folgt eine Station für die Rahmenmontage, Endkontrolle und Verpackung AS8. Sollen die fertig gerandeten Brillenlinsen L nicht vor Ort montiert werden, werden diese direkt von der Randbearbeitungsstation BS6 zu der Station für die Rahmenmontage, Endkontrolle und Verpackung AS8 transportiert. Hier werden die gerandeten Brillenlinsen L aus dem Transportkasten T entnommen, kontrolliert, gegebenenfalls in das Brillengestell BG montiert, verpackt und ohne den Transportkasten T an den gemeinsamen Versand AS9 weitergeleitet. Die mit den Blockstücken B beladenen Transportkästen T werden weiter in Richtung Blockstücklager BL transportiert.

Da sowohl die Blockstücke B als auch die Transportkästen T in regelmäßigen Abständen gereinigt und überprüft werden müssen und die Blockstücke B darüber hinaus naturgemäß eine begrenzte Lebensdauer aufweisen, werden die Transportkästen T nach dem Verlassen des Fertigstellungsbereichs FSB erneut von der Prozesssteuerung PS erfasst. Im dargestellten Ausführungsbeispiel hat die Prozesssteuerung PS bei Erfassung des Informationsträgers IT auch Information über eine Häufigkeit der Benutzung der in den jeweiligen Transportkästen T enthaltenen Blockstücke B. Nach Maßgabe dieser Information steuert die Prozesssteuerung PS eine dem Blockstücklager BL vorgelagerte Weiche WH so an, dass die Weiche WH z.B. bei Überschreitung einer vorbestimmten Häufigkeit der Benutzung die entsprechenden Transportkästen T zur manuellen Abholung und gründlichen Reinigung von Blockstück B und/oder Transportkasten T zur Vorbereitungsstation VS ausschleust, ansonsten aber die entsprechenden Transportkästen T mit den darin aufgenommenen Blockstücken B an das Blockstücklager BL weiterleitet. Andere Fälle des Ausschleusens über die Weiche WH sind das Erreichen der Lebensdauer der jeweiligen Blockstücke B oder auch die bereits oben angesprochenen "Mismatch"-Jobs in einem Transportkasten T.

Zu weiteren Details betreffend Einzelschritte einer ART-Produktionslinie sei schließlich an dieser Stelle nochmals ausdrücklich auf die eingangs angesprochene Informationsschrift der Anmelderin verwiesen.

Ein Verfahren zur Fertigung von individuellen Brillenlinsen nach einem Rezeptauftrag umfasst die Schritte: (i) Blocken eines bereitgestellten Linsenrohlings als Werkstück auf ein aus einem Blockstücklager von einer Mehrzahl von Blockstücken bereitgestelltes Blockstück mittels eines Blockmaterials, wobei eine erste Fläche des Linsenrohlings dem Blockstück zugewandt ist, (ii) Behandeln des geblockten Linsenrohlings zumindest an einer zweiten Fläche, um eine geblockte behandelte Brillenlinse als Werkstück zu erhalten, und (iii) Abblocken der behandelten Brillenlinse von dem Blockstück, wobei das Werkstück, ggf. im geblockten Zustand, zwischen den Schritten (i) bis (iii) in einem von mehreren vorgehaltenen Transportkästen transportiert wird. Bei dem Verfahren werden die Blockstücke vor dem Schritt (i) des Blockens in den Transportkästen in dem Blockstücklager gespeichert und für den Schritt (i) des Blockens in den Transportkästen aus dem Blockstücklager bereitgestellt und/oder die Blockstücke nach dem Schritt (iii) des Abblockens in den Transportkästen zu dem Blockstücklager transportiert.

### BEZUGSZEICHENLISTE

- AS1: Blockstation
- AS2: Abblockstation
- AS3: Station zur Blockmaterialresterkennung
- AS4: Station zum manuellen Ablocken und Reinigen
- AS5: Reinigungsstation
- AS6: Kontrollstation
- AS7: Station für Endkontrolle und Verpackung
- AS8: Station für die Rahmenmontage, Endkontrolle und Verpackung
- AS9: Versand
- B: Blockstück
- BF: Linsenbefestigungsfläche
- BG: Brillengestell
- BGL: Brillengestelllager
- BL: Blockstücklager
- BS1: Vorbearbeitungsstation
- BS2: Feinbearbeitungsstation
- BS3: Markierstation
- BS4: Beschichtungsstation
- BS5: Vakuum-Beschichtungsstation
- BS6: Randbearbeitungsstation
- CC: zweite Fläche der Brillenlinse / des Linsenrohlings
- CX: erste Fläche der Brillenlinse / des Linsenrohlings
- D: Durchmesser des Blockstücks
- EA: Einspannabschnitt des Blockstücks
- ES: Entstapler
- ET: Einsatzteil
- ET1: Aussparung
- ET2: Aufnahmeabschnitt
- ET3: Vorsprünge
- ET4: Stirnfläche
- FS: Förderstrecke
- FSB: Fertigstellungsbereich
- HL: Halbzeuglager
- HS: Handlingsystem
- IT: Informationsträger
- K: Blockkrümmung des Blockstücks
- KS: flexibler Kastenspeicher
- L: Brillenlinse
- LA: Lagerausgang
- LE: Lagereingang
- LR: Linsenrohling
- LOB: geblockte Brillenlinse / Linsenrohling
- M: Blockmaterial
- PB: Pufferband
- PS: Prozesssteuerung
- RD: Rand der Brillenlinse / Linsenrohling
- SP: Stapler
- SPL: sortiertes Pufferlager
- T: Transportkasten
- T01: Kastenboden
- T02: Kastenwand
- T03: Rippe
- T04: Schürzenabschnitt
- T05: Rippe
- T06: Längssteg
- T07: Quersteg
- T08: Schlitz
- T09: Steg
- T10: Aufnahmevorsprünge
- T11: Fortsatz
- T12: Stirnflächen
- T13: komplementäre Strukturen
- UPL: unsortiertes Pufferlager
- VS: Vorbereitungsstation
- WH: Weiche

## Patentansprüche

1. Verfahren zur Fertigung von individuellen Brillenlinsen (L) nach einem Rezeptauftrag, umfassend die Schritte:
(i) Blocken eines bereitgestellten Linsenrohlings (LR) als Werkstück, der eine erste Fläche (CX), eine zweite Fläche (CC) entgegengesetzt der ersten Fläche (CX) und einen Rand (RD) zwischen der ersten Fläche (CX) und der zweiten Fläche (CC) hat, auf ein von einer Mehrzahl von Blockstücken (B) aus einem Blockstücklager (BL) bereitgestelltes Blockstück (B) mit Hilfe eines Blockmaterials (M), wobei die erste Fläche (CX) des Linsenrohlings (LR) einer Linsenbefestigungsfläche (BF) des Blockstücks (B) zugewandt ist;
(ii) Behandeln des geblockten Linsenrohlings (LR) zumindest an der zweiten Fläche (CC), um eine geblockte behandelte Brillenlinse (L) als Werkstück zu erhalten; und
(iii) Abblocken der behandelten Brillenlinse (L) von dem Blockstück (B);
wobei das Werkstück, jeweils ggf. im geblockten Zustand, zwischen den Schritten (i) bis (iii) in einem von mehreren vorgehaltenen Transportkästen (T) transportiert wird;
**dadurch gekennzeichnet, dass** die Blockstücke (B) vor dem Schritt (i) des Blockens in den Transportkästen (T) in dem Blockstücklager (BL) gespeichert und für den Schritt (i) des Blockens in den Transportkästen (T) aus dem Blockstücklager (BL) bereitgestellt werden.

2. Verfahren nach Anspruch 1 oder dem Oberbegriff des Anspruchs 1, **dadurch gekennzeichnet, dass** die Blockstücke (B) nach dem Schritt (iii) des Abblockens in den Transportkästen (T) zu dem Blockstücklager (BL) transportiert werden.

3. Verfahren nach Anspruch 1 oder 2, **dadurch gekennzeichnet, dass** in dem mit wenigstens einem Lagerbereich versehenen Blockstücklager (BL) in den Transportkästen (T) Blockstücke (B) mit verschiedenen, vorbestimmten Blockstückgeometrien vorgehalten werden, die sich im Hinblick auf eine Blockkrümmung (K) der Linsenbefestigungsfläche (BF) und/oder einem Durchmesser (D) der Linsenbefestigungsfläche (BF) unterscheiden, wobei die Transportkästen (T) und/oder die Blockstücke (B) mit einem Informationsträger (IT) versehen sind, der bei Erfassung über eine Prozesssteuerung (PS) insbesondere zur Sortierung des Blockstücklagers (BL) und ggf. die Bereitstellung bestimmter Blockstücke (B) für den Schritt (i) des Blockens wenigstens Information über die Blockstückgeometrie der im jeweiligen Transportkasten (T) enthaltenen Blockstücke (B) gibt.

4. Verfahren nach Anspruch 3, **dadurch gekennzeichnet, dass** das Blockstücklager (BL) einen flexiblen Kastenspeicher (KS) als Lagerbereich umfasst, in dem die Transportkästen (T) mit den darin aufgenommenen Blockstücken (B) auf festen Lagerplätzen chaotisch eingelagert werden, wobei eine Zuordnung des jeweiligen Lagerplatzes zum darauf gelagerten Transportkasten (T) nach Maßgabe der Information des entsprechenden Informationsträgers (IT) erfolgt.

5. Verfahren nach Anspruch 3 oder 4, **dadurch gekennzeichnet, dass** das Blockstücklager (BL) ein unsortiertes Pufferlager (UPL) als Lagerbereich umfasst, in dem die Transportkästen (T) mit den darin aufgenommenen Blockstücken (B) unsortiert eingelagert werden, wobei vorzugsweise eine Stapelung der Transportkästen (T) erfolgt.

6. Verfahren nach einem der Ansprüche 3 bis 5, **dadurch gekennzeichnet, dass** das Blockstücklager (BL) ein sortiertes Pufferlager (SPL) als Lagerbereich umfasst, in dem die Transportkästen (T) mit den darin aufgenommenen Blockstücken (B) entsprechend der Information des Informationsträgers (IT) nach Blockstückgeometrie sortiert eingelagert werden, wobei vorzugsweise eine Stapelung der Transportkästen (T) mit jeweils gleichen Blockstücken (B) erfolgt.

7. Verfahren nach einem der Ansprüche 3 bis 6, **dadurch gekennzeichnet, dass** das Blockstücklager (BL) einen Lagereingang (LE) und einen Lagerausgang (LA) aufweist, die über eine Förderstrecke (FS) für die Transportkästen (T) miteinander verbunden sind, welche an den Lagerbereich bzw. an die Lagerbereiche angeschlossen ist, wobei die Transportkästen (T) mit den darin aufgenommenen Blockstücken (B) über die Förderstrecke (FS) von der Prozesssteuerung (PS) gesteuert wahlweise von dem Lagereingang (LE) zu dem jeweiligen Lagerbereich, von dem jeweiligen Lagerbereich zum Lagerausgang (LA) oder von dem Lagereingang (LE) direkt zum Lagerausgang (LA) gefördert werden.

8. Verfahren nach einem der Ansprüche 3 bis 7, **dadurch gekennzeichnet, dass** für den Schritt (i) des Blockens die Bereitstellung des jeweiligen Blockstücks (B) über die Prozesssteuerung (PS) nach Maßgabe einer durch den Rezeptauftrag definierten Geometrie der zu fertigenden Brillenlinse (L) durch Ausgabe des mit dem entsprechenden, über den Informationsträger (IT) identifizierten Blockstück (B) beladenen Transportkastens (T) aus dem Blockstücklager (BL) erfolgt.

9. Verfahren nach Anspruch 7, **dadurch gekennzeichnet, dass** für den Schritt (i) des Blockens über die Prozesssteuerung (PS) die Bereitstellung eines bestimmten Linsenrohlings (LR) nach Maßgabe der Information des Informationsträgers (IT) zur Blockstückgeometrie des Blockstücks (B) erfolgt, welches in dem Transportkasten (T) enthalten ist, der aktuell über die Förderstrecke (FS) zwischen Lagereingang (LE) und Lagerausgang (LA) gefördert wird.

10. Verfahren nach wenigstens den Ansprüchen 2 und 3, **dadurch gekennzeichnet, dass** die Prozesssteuerung (PS) bei Erfassung des Informationsträgers (IT) auch Information über eine Häufigkeit der Benutzung der in den jeweiligen Transportkästen (T) enthaltenen Blockstücke (B) hat, wobei dem Blockstücklager (BL) vorgelagert eine Weiche (WH) angeordnet ist, die mittels der Prozesssteuerung (PS) nach Maßgabe dieser Information so angesteuert wird, dass die Weiche (WH) bei Überschreitung einer vorbestimmten Häufigkeit der Benutzung die entsprechenden Transportkästen (T) zur manuellen Abholung und Reinigung von Blockstück (B) und/oder Transportkasten (T) ausschleust, ansonsten aber die entsprechenden Transportkästen (T) mit den darin aufgenommenen Blockstücken (B) an das Blockstücklager (BL) weiterleitet.

11. Verfahren nach einem der Ansprüche 3 bis 10, **dadurch gekennzeichnet, dass** die Informationsträger (IT) an den Transportkästen (T) und/oder den Blockstücken (B) sowohl lesbar als auch mit Information beschreibbar sind, wobei die Information der jeweiligen Informationsträger (IT) durch Beschreiben
vor dem Schritt (i) des Blockens im Hinblick auf eine Dringlichkeit des jeweiligen Rezeptauftrags und/oder
bei dem Schritt (i) des Blockens hinsichtlich von für den Schritt (ii) des Behandelns relevanten Blockparametern und/oder
während des Schritts (ii) des Behandelns im Hinblick auf Geometrieänderungen der jeweiligen Blockstücke (B) und/oder
nach dem Schritt (iii) des Abblockens hinsichtlich einer Notwendigkeit zur Reinigung der jeweiligen Blockstücke (B)
zur Berücksichtigung in jeweiligen Folgeschritten geändert oder erweitert wird.
